# EUROPEAN PATENT APPLICATION

(11) **EP 4 357 572 A1**
(43) Date of publication of application: **24.04.2024**
(21) Application number: 21960297.6
(22) Date of filing: 15.10.2021
(51) Int. Cl.: E05F 15/659, B60J 5/06

(54) **SLIDING DOOR ELECTRIC CONTROL MECHANISM AND METHOD, AND VEHICLE**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: SHI, Hongwei, Ningbo, Zhejiang 315336 (CN); LIN, Zhenliang, Ningbo, Zhejiang 315336 (CN); LU, Yun, Ningbo, Zhejiang 315336 (CN); LV, Guangwei, Ningbo, Zhejiang 315336 (CN); LI, Runguo, Ningbo, Zhejiang 315336 (CN)
(74) Representative: 2K Patentanwälte Blasberg Kewitz & Reichel
(86) International application number: PCT/CN2021/124135
(87) International publication number: WO 2023/060566

(57) **Abstract**

The invention provides an electronic control mechanism and method for sliding door, and a vehicle using the same, which in particular relates to the field of electronic control for vehicles. The electronic control mechanism for sliding door includes a switch, a controller, and a backup power supply. The switch is arranged at a position where the sliding door is in contact with a vehicle body, connects a circuit on the sliding door and the vehicle body when the sliding door is closed, and disconnects the circuit on the sliding door and the vehicle body when the sliding door is opened; the controller is arranged in the sliding door, and the controller is electrically connected with each component on the sliding door that needs to be controlled and is communicated with a vehicle body controller; the backup power supply is arranged in the sliding door, and the backup power supply is electrically connected with each component on the sliding door; and the backup power supply and the controller provide power support and control support for each component on the sliding door respectively when the sliding door is opened. The electronic control mechanism for sliding door of the invention can enable the vehicle to maintain normal operation of the sliding door under wireless wiring connection of the vehicle, and has the advantages of simple structure, versatility and high integration.

## Description

### BACKGROUND OF THE INVENTION

### Field of the Invention

The invention relates to the technical field of electronic control for vehicles, in particular, to an electronic control mechanism and method for sliding door, and a vehicle using the same.

### Description of the Prior Art

There are many ways to open vehicle doors. In order to meet the growing needs of customers such as larger space, larger cargo capacity, more convenient ways to get out of the vehicle and better loading and unloading space, sliding doors are used more and more frequently in vehicles. Common-used electrical systems for sliding door require continuous power supply, namely the wiring harness of sliding door, for connection to realize the electrical functions on the sliding door. However, these systems require a special wiring harness for sliding door, which cannot be used universally by all vehicle models, and also require an interior panel to shield the wiring harness for sliding door so that the structure is complex. Therefore, there is an urgent need to develop an electronic control mechanism for sliding door, and to provide an electronic control system for sliding door that is simple in structure, highly versatile and does not require complex matching structure design, so as to solve the above drawbacks in the prior art.

### SUMMARY OF THE INVENTION

In view of the above disadvantages in the prior art, an objective of the invention is to provide an electronic control method mechanism and method for sliding door, and a vehicle using the same, so as to improve the technical problems in the prior art that the electronic control system on the sliding door needs to be connected to the vehicle body through the wiring harness for sliding door, and the wiring harness for sliding door on the vehicle has a complex structure and poor versatility.

In order to achieve the above objective and other related objectives, the invention provides an electronic control mechanism for sliding door. The electronic control mechanism for sliding door includes a switch, a controller, and a backup power supply.

The switch is arranged at a position where the sliding door is in contact with a vehicle body, connects a circuit on the sliding door and the vehicle body when the sliding door is closed, and disconnects the circuit on the sliding door and the vehicle body when the sliding door is opened; the controller is arranged in the sliding door, and the controller is electrically connected with each component on the sliding door that needs to be controlled and is communicated with a vehicle body controller; the backup power supply is arranged in the sliding door, and the backup power supply is electrically connected with each component on the sliding door; and the backup power supply and the controller provide power support and control support for each component on the sliding door respectively when the sliding door is opened.

In an embodiment of the electronic control mechanism for sliding door of the invention, the switch is a contact-type switch, and the contact-type switch includes a first contact piece and a second contact piece, the first contact piece being arranged at the position where the vehicle body is in contact with the sliding door, the first contact piece being electrically connected with a main power supply and the body controller of the vehicle through circuit; the second contact piece is arranged on the sliding door corresponding to a position of the first contact piece on the vehicle body, and the second contact piece is electrically connected with the controller, the backup power supply and each component of the sliding door through circuit.

In an embodiment of the electronic control mechanism for sliding door of the invention, when the sliding door is closed, the first contact piece comes into contact with the second contact piece to open the contact-type switch, and a circuit of the first contact piece on one side of the vehicle body is connected to a circuit of the second contact piece on one side of the sliding door; when the sliding door is opened, the first contact piece comes out of contact with the second contact piece so that the contact-type switch is closed, and the circuit of the first contact piece on one side of the vehicle body is disconnected from the circuit of the second contact piece on one side of the sliding door.

In an embodiment of the electronic control mechanism for sliding door of the invention, the sliding door is provided with an electric door lock, and the controller is electrically connected with the electric door lock to detect whether the sliding door is in an open state or a closed state.

In an embodiment of the electronic control mechanism for sliding door of the invention, when the sliding door is closed, the main power supply and the vehicle body controller of the vehicle are connected to each electrical component on the sliding door through the contact-type switch, the main power supply supplies power to each component on the sliding door, and the vehicle body controller controls an operation of each component on the sliding door that needs to be controlled.

In an embodiment of the electronic control mechanism for sliding door of the invention, the sliding door is provided with a power detector, and the power detector is used to monitor a power of the backup power supply.

In an embodiment of the electronic control mechanism for sliding door of the invention, when the sliding door is closed and the power detector detects that the power of the backup power supply is lower than a preset power value, the main power supply charges the backup power supply.

The invention further provides an electronic control method for sliding door, the electronic control method for sliding door including:
arranging a switch at a position where the sliding door is in contact with a vehicle body, wherein a circuit on the sliding door and the vehicle body is connected by closing the switch when the sliding door is closed, and the switch is disengaged and released to disconnect the circuit between the sliding door and the vehicle body when the sliding door is opened; arranging a controller in the sliding door, and electrically connecting the controller with each component on the sliding door that needs to be controlled; arranging a backup power supply in the sliding door, and electrically connecting the backup power supply with each electrical component on the sliding door; providing power support and control support for each component on the sliding door respectively through the backup power supply and the controller when the sliding door is opened, while communicating the controller with a vehicle body controller to receive a control signal sent by the vehicle body controller.

The invention further provides a vehicle, which uses the electronic control method for sliding door according to any of the above embodiments to control the operation of the sliding door.

The invention further provides a vehicle, and the electronic control method for sliding door according to any one of the above is mounted on the vehicle body and the sliding door of the vehicle.

For the electronic control mechanism for sliding door of the invention, the switch is arranged at the position where the vehicle body is in contact with the sliding door so that the circuit on the vehicle body and sliding door may be connected when the sliding door is closed without wiring harness connection, and the backup power supply and the controller are arranged in the sliding door, so as to maintain normal operation of the sliding door when the sliding door is opened; and the electronic control mechanism has the advantages of simple structure, high versatility and high integration, and can be designed in free combination with other components of the sliding door, thereby effectively reducing the cost of the sliding door.

### BRIEF DESCRIPTION OF THE DRAWINGS

In order to more clearly describe the technical solutions of the embodiments of the present invention, the accompanying drawings required to describe the embodiments are briefly described below. Apparently, the accompanying drawings described below are only some embodiments of the present invention. A person skilled in the art may obtain other drawings from the accompanying drawings without involving an inventive effort.

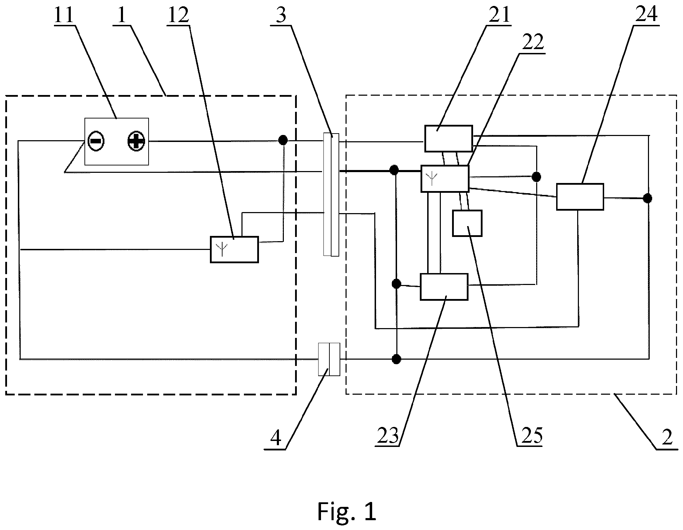

Fig. 1 is a structural diagram of a circuit of an electronic control mechanism for sliding door of the invention in an embodiment;

### Descriptions for numerals of members:

1. Vehicle body electrical appliance module; 11. Main power supply; 12. Vehicle body controller; 2. Electrical appliance module for sliding door; 21. Backup power supply; 22. Controller; 23. electric door lock; 24. Glass motor; 25. Power detector; 3. Switch; 31. First contact piece; 32. Second contact piece; 4. Sliding door hinge.

### DESCRIPTION OF THE PREFERRED EMBODIMENTS

Through specific examples of the present invention below, technicians of the field can easily understand other advantages and efficacies of the present invention revealed by the specification The present invention can also be implemented or applied through other different ways, and the details of the specification can also be modified or changed based on different views and applications without deviating from the present invention It should be noted that, in the case of no conflicts, the following embodiments and features in the embodiments can be combined mutually. It should also be understood that the terminology used in the embodiments of the present invention is for describing specific embodiments and is not intended to limit the scope of the present invention. The experimental methods that do not specify the specific conditions in the following examples are generally based on conventional conditions or according to manufacturer' s recommended conditions.

Please refer to Fig. 1. It should be noted that the structures, proportions, sizes, etc. shown in the drawings of this specification are only used to coordinate with the content disclosed in the specification for the understanding and reading of those skilled in the art, and are not used to limit the conditions for the implementation of the present invention, so they have no technical substantive significance. Any structural modifications, changes in proportions, or adjustments in size should still fall within the scope of the technical content disclosed in the present invention without affecting the effectiveness and purpose of the present invention. At the same time, terms such as "upper", "lower", "left", "right", "middle" and "one" cited in this specification are only for convenience of description and are not used to limit the scope of the present invention. Changes or adjustments in their relative relationships, as long as there is no substantial change in the technical content, shall also be deemed to be within the scope of the present invention.

When the embodiments give numerical ranges, it should be understood that, unless otherwise stated in the present invention, both endpoints of each numerical range and any value between the two endpoints can be selected. Unless otherwise defined, all technical and scientific terms used in the present invention are consistent with those skilled in the art who have knowledge of the prior art and the description of the present invention. They can also use methods, equipment, and materials similar to those described in the embodiments of the present invention. or any equivalent prior art methods, equipment and materials to implement the present invention.

With reference to Fig. 1, an objective of the invention is to provide an electronic control mechanism and method for sliding door, and a vehicle using the same, so as to improve the technical problems in the prior art that the electronic control system on the sliding door needs to be connected to the vehicle body through the wiring harness for sliding door, and the wiring harness for sliding door on the vehicle has a complex structure and poor versatility.

With reference to Fig. 1, Fig. 1 is a structural diagram of a circuit of an electronic control mechanism for sliding door of the invention in an embodiment. The above electronic control mechanism for sliding door is arranged in a vehicle body electrical appliance module 1 and an electrical appliance module for sliding door 2, wireless connection between the electrical appliance module for sliding door 2 and the vehicle body electrical appliance module 1 is realized by arranging a switch 3 and a sliding door hinge 4 at a position where the vehicle body is in contact with the sliding door, and related modules such as a backup power supply 21 and a controller 22 are arranged in the electrical appliance module for sliding door 2, so as to maintain normal operation when the sliding door is opened. As seen from the above, it can be known that the electronic control mechanism for sliding door of the invention may include a switch 3, a backup power supply 21, and a controller 22.

As shown in Fig. 1, the switch 3 is arranged at the position where the sliding door is in contact with the vehicle body, wherein the position where the switch 3 is mounted is not limited, and in an embodiment of the invention, the position where the switch 3 is arranged is located at a guide rail where the sliding door is in contact with the vehicle body. The switch 3 is a contact-type switch, and divided into two parts, wherein one part is arranged on the sliding door, the other part is arranged on the vehicle body. When the sliding door is closed, the part of the switch 3 on the sliding door comes into contact with the other part thereof on the vehicle body to, in combination of a circuit on sliding door hinge 4 that remains connected and the vehicle body and the sliding door, connect a circuit on the vehicle body electrical appliance module 1 and the electrical appliance module for sliding door 2. When the sliding door is opened, the part of the switch 3 on the sliding door is out of contact with the other part thereof on the vehicle body, causing the circuit on the vehicle body electrical appliance module 1 and the electrical appliance module for sliding door 2 to be disconnected.

As shown in Fig. 1, the above controller 22 is arranged in the sliding door electrical appliance module 2 in the sliding door; the controller 22 is electrically connected with each component on the sliding door that needs to be controlled such as electric door lock 23, the glass motor 24, the glass window switches and other components, and is also electrically connected with the switch 3 through a circuit. The controller 22 is further provided with a wireless communication module, and may be also communicated with the vehicle body controller 12 through a wireless network in addition to being connected with the vehicle body controller 12 in the vehicle body electrical appliance module 1 through wired circuits, so as to enable the sliding door to receive control support from the vehicle body controller 12 in a wireless state to achieve normal operation and control of tasks such as door locking and window opening

As shown in Fig. 1, the above backup power supply 21 is arranged in the sliding door electrical appliance module 2 in the sliding door; the backup power supply 21 is electrically connected with each electrical component on the sliding door such as the electric door lock 23, the glass motor 24, the glass window switches and other components through a circuit, and is also electrically connected with the switch 3 through a circuit. The above arrangement enables the backup power supply 21 to provide power support for each electrical component in the electrical appliance module for sliding door 2 and at the same time connect the main power supply through the switch 3 for charging.

When the sliding door is closed, the circuit on the electrical appliance module for sliding door 2 is connected with the circuit on the vehicle body electrical appliance module 1 through the switch 3, and the main power supply 11 and the vehicle body controller 12 of the vehicle are connected to each electrical component on the sliding door and each component that needs to be controlled through the switch 3, the main power supply 11 providing power support for each electrical component on the sliding door, the vehicle body controller 12 providing control support for each component on the sliding door that needs to be controlled; when the sliding door is opened, the circuit on the vehicle body electrical appliance module 1 is disconnected from the circuit on the electrical appliance module for sliding door 2, and the backup power supply 21 in the electrical appliance module for sliding door 2 provides power support for each electrical component on the sliding door, wherein the backup power supply 21 and the sliding door hinge 4 provide power and auxiliary grounding for the electrical appliance module for sliding door 2 respectively, and the controller 22 controls the operation of each component on the sliding door that needs to be controlled, e.g., controlling the glass motor 24 to lift the door and window glass, controlling a switch of the electric door lock 23, etc., while the controller 22 being also communicated with the vehicle body controller 12 in a timely manner through a built-in wireless communication module to feed back switching status of the sliding door to a combined instrument panel of the vehicle for display through the vehicle body controller 12 for reminding a driver of an open status of the sliding door to avoid the problem of forgetting to close the door; further, when the controller 22 receives a sleep signal sent by the vehicle body controller 12, it enters the sleep status synchronously.

As shown in Fig. 1, in an embodiment of the invention, the switch 3 is a contact-type switch, and the switch 3 includes a first contact piece 31 and a second contact piece 32. The first contact piece 31 is arranged at the position where the vehicle body is in contact with the sliding door, such as at the guide rail where the vehicle body is in contact with the sliding door; the second contact piece 32 is arranged on the sliding door corresponding to a position of the first contact piece 31 on the vehicle body. The first contact piece 31 is electrically connected with the main power supply 11 of the vehicle body electrical appliance module 1 and the vehicle body controller 12 in the vehicle body through a circuit, and the second contact piece 32 is electrically connected with the backup power supply 21, the controller 22, the electric door lock 23, the glass motor 24 and other components of the electrical appliance module for sliding door 2 in the sliding door through a circuit.

In the embodiment, when the sliding door is closed, the first contact piece 31 and the second contact piece 32 of the switch 3 are in contact so that the contact-type switch is opened, and the circuit on the vehicle body electrical appliance module 1 and the electrical appliance module for sliding door 2 are connected through the switch 3 and the sliding door hinge 4; when the sliding door is opened, the first contact piece 31 and the second contact piece 32 of the switch 3 are out of contact, causing the contact-type switch to close, and the circuit on the vehicle body electrical appliance module 1 and the electrical appliance module for sliding door 2 are disconnected.

As shown in Fig. 1, in an embodiment of the invention, the sliding door is further provided with an electric door lock 23, and the controller 22 is electrically connected with the electric door lock 23; the electric door lock 23 may send a locking signal and an unlocking signal to the controller 22 when the sliding door is opened and closed, and the controller 22 detects whether the sliding door is in an open state or a closed state by receiving the unlocking signal and the locking signal from the electric door lock 23.

As shown in Fig. 1, in an embodiment of the invention, the sliding door electrical appliance module 2 of the sliding door is provided inside with a power detector 25, the power detector 25 is electrically connected with the backup power supply 21 and the controller 22, and the power detector 25 is used to monitor a power of the backup power supply 21; when the power detector 25 detects that the remaining power in the backup power supply 21 is lower than a preset power value, it will send out a low power signal and communicate with the vehicle body controller 12 through the controller 22, or directly send the signals to the vehicle body controller 12 through the connected circuits, for finally displaying on the combined instrument panel and issuing a buzzer alarm; if the sliding door is closed, the main power supply 11 in the vehicle body electrical appliance module 1 charges the backup power supply 11 through the circuit connected by the switch 3; if the sliding door is open, the user needs to close the sliding door first, and then charge the backup power supply 11 through the main power supply 11 in the vehicle body electrical appliance module 1.

The invention further provides an electronic control method for sliding door, the electronic control method for sliding door including the followings.

A switch 3 is arranged at a position where the sliding door is in contact with a vehicle body, wherein circuits in the sliding door electrical appliance module 2 on the sliding door and the vehicle body electrical appliance module 1 on the vehicle body are connected with each other by closing the switch when the sliding door is closed, and the part on the sliding door and the part on the body of the switch 3 are disengaged from each other to disconnect the circuits in the sliding door electrical appliance module 2 on the sliding door and the vehicle body electrical appliance module 1 on the vehicle body when the sliding door is opened.

A controller 22 is arranged in the sliding door, and the controller 22 is electrically connected with each component in the sliding door electrical appliance module 2 on the sliding door that needs to be controlled.

A backup power supply 21 is arranged in the sliding door, and the backup power supply 21 is electrically connected with each electrical component in the sliding door electrical appliance module 2 on the sliding door.

The power support and control support are provided for each component in the sliding door electrical appliance module 2 on the sliding door respectively through the backup power supply 21 and the controller 22 when the sliding door is opened, while the controller 22 further communicating with the vehicle body controller to receive a control signal sent by the vehicle body controller through a wireless network.

The invention further provides a vehicle. The vehicle includes a vehicle body and a plurality of sliding doors assembled to the vehicle body, and the vehicle body and the plurality of sliding doors in the vehicle are equipped with the electronic control mechanism for sliding door according to any one of the above embodiments, so as to maintain the normal operation of the sliding door when the vehicle is not equipped with a wiring harness for sliding door.

The invention further provides a vehicle. The vehicle includes a vehicle body and a plurality of sliding doors assembled to the vehicle body, and the vehicle uses the electronic control method for sliding door according to any of the above embodiments to control the operation of the sliding door.

For the electronic control mechanism for sliding door of the invention, the switch 3 is arranged at the position where the vehicle body is in contact with the sliding door so that the circuit on the vehicle body and sliding door may be connected when the sliding door is closed without wiring harness connection, and the backup power supply 21 and the controller 22 are arranged in the sliding door so as to maintain normal operation of the sliding door when the sliding door is opened. In summary, the electronic control mechanism for sliding door of the invention may maintain normal operation of the sliding door without wiring connection design of the vehicle, and the electronic control mechanism has the advantages of simple structure, high versatility and high integration and may be freely combined with other components of the sliding door so as to effectively reduce the cost of the sliding door.

The preferred embodiments of the present invention disclosed above are only used to help the description of the present invention. The preferred embodiments do not describe all the details, and are not intended to limit the invention only to be the specific embodiments. It is obvious that various modifications and changes can be made to the content of the specification. The present invention selects and specifically describe the embodiments with the purpose of better explain the principle and practical use of the present invention, such that a person skilled in the art can well understand and utilize the present invention. The present invention is merely limited by the appended claims and the scope and equivalents thereof.

## Claims

1. The electronic control mechanism for sliding door comprising:
a switch arranged at a position where the sliding door is in contact with a vehicle body, the switch connecting a circuit on the sliding door and the vehicle body when the sliding door is closed and disconnecting the circuit on the sliding door and the vehicle body when the sliding door is opened;
a controller arranged in the sliding door, the controller being electrically connected with each component on the sliding door that needs to be controlled and being communicated with a vehicle body controller;
a backup power supply arranged in the sliding door, the backup power supply being electrically connected with each electrical component on the sliding door;
wherein the backup power supply and the controller provide power support and control support for each component on the sliding door respectively when the sliding door is opened.

2. The electronic control mechanism for sliding door according to claim 1, wherein the switch is a contact-type switch, and the contact-type switch comprises a first contact piece and a second contact piece, the first contact piece being arranged at the position where the vehicle body is in contact with the sliding door, the first contact piece being electrically connected with a main power supply and a body controller of a vehicle through circuit; the second contact piece is arranged on the sliding door corresponding to a position of the first contact piece on the vehicle body, and the second contact piece is electrically connected with the controller, the backup power supply, and each component of the sliding door through circuit.

3. The electronic control mechanism for sliding door according to claim 2, wherein when the sliding door is closed, the first contact piece comes into contact with the second contact piece to open the contact-type switch, and a circuit of the first contact piece on one side of the vehicle body is connected to a circuit of the second contact piece on one side of the sliding door; when the sliding door is opened, the first contact piece comes out of contact with the second contact piece so that the contact-type switch is closed, and the circuit of the first contact piece on one side of the vehicle body is disconnected from the circuit of the second contact piece on one side of the sliding door.

4. The electronic control mechanism for sliding door according to claim 1, wherein the sliding door is provided with an electric door lock, and the controller is electrically connected with the electric door lock to detect whether the sliding door is in an open state or a closed state.

5. The electronic control mechanism for sliding door according to claim 2, wherein when the sliding door is closed, the main power supply and the vehicle body controller of the vehicle are connected to each electrical component and each component that needs to be controlled on the sliding door through the contact-type switch, the main power supply supplies power to each electrical component on the sliding door, and the vehicle body controller controls an operation of each component on the sliding door that needs to be controlled.

6. The electronic control mechanism for sliding door according to claim 1, wherein the sliding door is provided with a power detector, and the power detector is used to monitor a power of the backup power supply.

7. The electronic control mechanism according to claim 5 or 6, wherein when the sliding door is closed and the power detector detects that the power of the backup power supply is lower than a preset power value, the main power supply charges the backup power supply.

8. An electronic control method for sliding door comprising:
arranging a switch at a position where the sliding door is in contact with a vehicle body, wherein a circuit on the sliding door and the vehicle body is connected by closing the switch when the sliding door is closed, and the switch is disengaged and released to disconnect the circuit between the sliding door and the vehicle body when the sliding door is opened;
arranging a controller in the sliding door, and electrically connecting the controller with each component on the sliding door that needs to be controlled;
arranging a backup power supply in the sliding door, and electrically connecting the backup power supply with each electrical component on the sliding door;
providing power support and control support for each component on the sliding door respectively through the backup power supply and the controller when the sliding door is opened, while communicating the controller with a vehicle body controller to receive a control signal sent by the vehicle body controller.

9. A vehicle, comprising a vehicle body and a plurality of sliding doors, wherein the vehicle body and the sliding door in the vehicle is mounted with the electronic control mechanism for sliding door according to any one of claims 1 to 7.

10. A vehicle, comprising a vehicle body and a plurality of sliding doors, wherein the vehicle adopts the electronic control method for sliding door according to claim 8 to control the sliding door to operate.
